# EUROPÄISCHE PATENTSCHRIFT

(11) **EP 2 973 980 B1**
(45) Veröffentlichungstag und Bekanntmachung des Hinweises auf die Patenterteilung: **10.05.2017**
(21) Anmeldenummer: 14708285.3
(22) Anmeldetag: 07.03.2014
(51) Int. Cl.: H02N 2/00

(54) **ANORDNUNG FÜR EINEN ULTRASCHALLMOTOR**
ASSEMBLY FOR AN ULTRASONIC MOTOR
DISPOSITIF POUR MOTEUR À ULTRASONS

(30) Priorität: 08.03.2013 DE 102013204026
(43) Veröffentlichungstag der Anmeldung: 20.01.2016
(73) Patentinhaber: Physik Instrumente (PI) GmbH & Co. KG, 76228 Karlsruhe (DE)
(72) Erfinder: HÜBNER, Reinhard, 76337 Waldbronn (DE)
(74) Vertreter: Kruspig, Volkmar
(86) Internationale Anmeldenummer: PCT/EP2014/054429
(87) Internationale Veröffentlichungsnummer: WO 2014/135675

(56) Entgegenhaltungen:
- WO-A1-2009/056382
- WO-A1-2010/076113
- DE-A1-102007 009 874
- US-A1- 2004 007 944
- US-A1- 2006 267 454
- US-A1- 2008 211 348

## Beschreibung

Die Erfindung betrifft eine Anordnung für einen Ultraschallmotor nach Anspruch 1. Ultraschallmotoren bestehen in ihren Grundkomponenten aus einem Aktorkörper, der mittels einer Elektrodenanordnung auf piezoelektrischem Wege zu Schwingungen im Ultraschallfrequenzbereich angeregt wird, und einem Reibelement, das mit dem Aktorkörper im Reibschluss steht und von diesem über die Ultraschallschwingungen bewegt wird. Der Aktorkörper bildet hierbei den Stator des Ultraschallmotors, das Reibelement den Rotor bei einem Rotationsmotor bzw. das linear bewegte Element bei einem Linearmotor. WO 2009/056382 A1 zeigt einen Motor, der eine Verkippung des Aktors gegen das anzutreibende Element zulässt. Der Aktorkörper wird von einer Aktorhalterung getragen und von weiteren Elementen in Bezug auf das Reibelement positioniert, während das Reibelement von einer entsprechenden Reibelement-Halterung getragen wird bzw. positioniert ist. Zusammen mit der Aktorhalterung und einem Aktorlager ergeben die vorgenannten Komponenten eine Anordnung für den Ultraschallmotor. Bei einem realistischen Aufbau des Ultraschallmotors sind diese Komponenten der Anordnung, insbesondere die zur Positionierung des Aktorkörpers, nur begrenzt steif. Dessen Position variiert während des Betriebes des Ultraschallmotors, sodass auch die Ausrichtung zwischen dem Aktorkörper und dem Reibelement variiert bzw. fluktuiert und nicht in jedem Fall optimal ist. Durch diese Fluktuationen entstehen unter anderem starke Kräfte quer zur Antriebsrichtung. Diese bewirken wiederum eine zusätzliche Verschiebung des Aktorkörpers und verstärken somit teilweise die nachteilige Positionierung des Aktorkörpers zum Reibelement. Dies ruft eine Reihe weiterer unerwünschter Phänomene am Utraschallmotor hervor, wie beispielsweise einen unruhigen Lauf. Diesen nachteiligen Wirkungen kann in gewisser Weise dadurch begegnet werden, indem der Kontakt zwischen dem Aktorkörper und dem Reibelement so klein wie möglich gestaltet und praktisch auf einen Punkt reduziert wird. Ein derartiger Punktkontakt erzeugt jedoch einen hohen Kontaktdruck zwischen dem Aktorkörper und dem Reibelement und schränkt bei zunehmender Betriebsdauer die Güte des Reibschlusses und vor allem die Lebensdauer des Aktorkörpers bzw. des Reibelements ein.

Es besteht daher die Aufgabe, eine Anordnung für einen Ultraschallmotor zu schaffen, bei der der unvermeidlich nur begrenzt steife Aufbau minimierte negative Wechselwirkungen der beschriebenen Art mit sich bringt oder sogar in seiner Gesamtheit so eingerichtet ist, dass sich die negativen Eigenschaften des realen Aufbaus gegeneinander möglichst aufheben oder sogar in vorteilhafter Weise verstärken. Das Ziel besteht auch darin, die Kontaktfläche zwischen Aktorkörper und Reibelement soweit vergrößern zu können, dass die Lebensdauer des Aktorkörpers und des Reibelments gesteigert wird, während aber die unvermeidbare Aktorverschiebung und die damit verbundenen Effekte minimiert oder zumindest nicht nachteilig beeinflusst sind.

Die Aufgabe wird mit einer Anordnung für einen Ultraschallmotor mit den Merkmalen des Anspruchs 1 gelöst. Die Unteransprüche enthalten zweckmäßige und/oder vorteilhafte Ausgestaltungen der Anordnung.

Die Anordnung für einen Ultraschallmotor umfasst einen Aktorkörper, eine den Aktorkörper aufnehmende Aktorhalterung, ein Aktorlager und ein vom Aktorkörper getriebenes Reibelement, wobei zwischen dem Aktorkörper und dem Reibelement ein flächiger Reibkontakt besteht. Dabei weist die Anordnung eine optimierte, Kippachse auf, um die die Aktorhalterung und mit diesem der Aktorkörper oder das Reibelement bzw. die entsprechende Reibelement-Halterung verschwenkbar ist. Die optimierte Kippachse verläuft hierbei nicht durch den Schwerpunkt des Aktorkörpers, sondern ist vom Schwerpunkt des Aktorkörpers beabstandet und ausgehend von diesem in Richtung des vom Aktorkörper berührten Abschnittes des getriebenen Reibelementes verlagert.

Bei einer erfindungsgemäßen Ausgestaltung der erfindungsgemäßen Anordnung verläuft die optimierte Kippachse durch die Querschnittsfläche des von dem Aktorkörper berührten Abschnittes des getriebenen Reibelementes, wodurch insbesondere eine Stabilisierung bzw. Selbstausrichtung bezüglich der Reibpaarung Aktorkörper - getriebenes Reibelement resultiert.

Der Grundgedanke der erfindungsgemäßen Anordnung besteht darin, die unvermeidlichen Kippungen der Aktorhalterung und damit des Aktorkörpers gegenüber dem getriebenen Reibelement zur optimierten Ausrichtung der Reibpaarung Aktorkörper - Reibelement zu nutzen. Dieser Grundgedanke wird dadurch verwirklicht, indem das Aktorlager der Anordnung so gestaltet ist, dass bei dieser die auftretenden Kippungen des Aktorkörpers um eine optimierte Kippachse vollführt werden, die nicht durch den Schwerpunkt des Aktorkörpers verläuft, sondern zur Reibfläche hin verschoben ist, so dass sich ein veränderter und in der Regel verkürzter Hebel der Querkraft um die optimierte Kippachse ergibt und sich ein erhöhtes Trägheitsmoment des Aktorkörpers einstellt. In besonders vorteilhafter Weiterbildung verläuft die optimierte Kippachse durch die Querschnittsfläche desjenigen Abschnittes des Reibelementes, der momentan von dem Aktorkörper berührt wird und mit diesem im Reibschluss steht. Bei einer solchen Konfiguration stabilisieren die auftretenden Querkräfte die Lage des Reibelementes, wie im Folgenden näher erläutert werden wird. Praktisch wird somit ein unvermeidlich auftretender Störeffekt zur Selbststabilisierung und Selbstausrichtung der erfindungsgemäßen Anordnung benutzt.

Durch die erfindungsgemäße Verschiebung des rotatorischen Aktorfreiheitsgrades aus dem Schwerpunkt des Aktorkörpers in Schubrichtung, d. h. hin zum Reibelement, verringert sich die Amplitude, aber auch die Geschwindigkeit und die Frequenz und somit der Energieinhalt unerwünschter Aktorquerbewegungen deutlich. Beim Stand der Technik ergibt sich bei klassischer Lage der Kippachse im Aktorschwerpunkt der Nachteil eines ungleichen Anpressdruckes mit einer starken Querkraft auf das Reibelement. Insbesondere bei Verlauf der optimierten Kippachse durch die Querschnittsfläche desjenigen Abschnittes des Reibelementes, der momentan von dem Aktorkörper berührt wird, reduziert sich der ungleiche Anpressdruck bei der zur Reibfläche hin verschobenen optimierten Kippachse mit der Folge, dass die resultierende Querkraft nahezu verschwindet. Im Ergebnis ergibt sich mit der erfindungsgemäßen Anordnung ein entsprechender Ultraschallmotor mit einem ruhigen und gleichmäßigen Lauf und damit verbundener höherer Lebensdauer von Aktorkörper bzw. Reibelement. Zudem resultiert hieraus ein wesentlich besser beherrschbares Regelverhalten des Ultraschallmotors.

Bei einer erfindungsgemäßen Ausgestaltung besteht die Möglichkeit, den rotatorischen Freiheitsgrad des Aktors, respektive die optimierte Kippachse, um wenige Grad um die Senkrechte bzw. Normale der Reibfläche gegenüber dem Reibelement zu drehen, wodurch der Antrieb insgesamt noch harmonischer, d. h. schwingungsfreier, läuft.

Die vorstehenden Ausführungen beziehen sich stets auf die Verkippung des Aktorkörpers bzw. der Aktorhalterung bezüglich des Reibelements. Der erfindungsgemäße Gedanke umfasst jedoch auch die Möglichkeit der entsprechenden Verkippung des Reibelements bzw. einer entsprechenden Reibelement-Halterung gegenüber dem Aktorkörper. Entscheidend ist also die entsprechende Relativbewegung zwischen Aktorkörper bzw. Aktorhalterung und Reibelement bzw. Reibelement-Halterung.Erfindungsgemäß ist das Aktorlager durch ein Gleitlager gebildet, dessen Gleitflächen einen Kippfreiheitsgrad aufweisen. Die Achse des Kippfreiheitsgrades ist mit der optimierten Kippachse C bzw. C' identisch. Der Kippfreiheitsgrad ist dabei der einzige Freiheitsgrad des Gleitlagers. Andere Bewegungen werden durch das Gleitlager in den Kippfreiheitsgrad überführt.

Zweckmäßigerweise sind dabei die Gleitflächen des Gleitlagers mittels einer Druckfeder gegeneinander gedrückt. Dadurch erhält das Gleitlager eine bestimmte Grundsteifigkeit, wobei aber der Kippfreiheitsgrad hinreichend gut erhalten bleibt. Ebenso ist es denkbar, dass die Gleitflächen des Gleitlagers über wenigstens eine Zugfeder gegeneinander gedrückt sind.

Bei einer zweckmäßigen Gestaltung ist die Druckfeder auf eine raumfeste Aktorfassung gegengelagert. Dabei ist die Druckfederkraft über die Aktorhalterung in eine Normal- und eine Tangentialkomponente geteilt. Die Normalkomponente drückt den Aktorkörper auf das Reibelement und die Tangentialkomponente drückt die Gleitflächen des Aktorlagers gegeneinander. Es wird somit ein bestimmtes Kraftverhältnis zwischen der Kraft eingestellt, die den Reibschluss zwischen dem Aktorkörper und dem Reibelement sichert und der Kraft, die das Maß der Verkippung des Aktorelementes um die optimierte Kippachse bestimmt. Kippung, Gleitlagerung und Reibschluss wirken hier also ergänzend und wechselseitig zusammen.

Im Zusammenhang mit dem bisher Ausgeführten ist das von der Anordnung getriebene Reibelement ein rotatorisch getriebenes Element mit einer kreisringförmigen Außenkontur. Erfindungsgemäß ist das Aktorlager als eine so genannte Goniometer-Lagerung ausgebildet.

In vorteilhafter Weiterbildung enthält die Goniometer-Halterung ein die Aktorhalterung mittels eines Durchbruchs umfassendes und auf einen raumfesten Aktorrahmen montiertes Goniometerblech, wobei das Goniometerblech eine Form aufweist, die eine Verkippung des Aktorlagers um eine mit dem Verlauf der optimierten Kippachse identische Achse ermöglicht.

Bei dieser Ausführungsform wird somit die Steifigkeit der Lagerung der Aktorhalterung durch die Biegesteifigkeit des Goniometerblechs erreicht. Die Reduzierung der möglichen Freiheitsgrade auf den Kippfreiheitsgrad und die Justierung der Kippachse auf die optimierte Kippachse geschieht durch die Formgebung des Goniometerblechs.

Bei einer vorteilhaften Gestaltung wird die Aktorhalterung mittels einer auf den raumfesten Aktorrahmen rückgelagerten Federanordnung in dem Durchbruch des Goniometerblechs gehalten. Es kommen somit keine starren Befestigungsmittel, sondern ausschließlich Spannmittel zur Lagerung der Aktorhalterung im Goniometerblech zur Anwendung. Dies verhindert den Eintrag von Spannungen über punktförmig ausgebildete Schraubverbindungen und vereinfacht den Aufbau der Anordnung.

Bei einer zweckmäßigen Ausgestaltung ist die Federanordnung durch mindestens zwei Druckfedern gebildet, wobei sich die Richtungen der durch die Druckfedern ausgeübten Druckkräfte im Bereich eines am Aktorkörper befindlichen Friktionselementes schneiden. Hierdurch wird eine zentrierende und stabilisierende Wirkung der Federanordnung auf den Verband aus Aktorhalterung und Goniometerblech sowie auch auf den Kontakt aus Aktorkörper, Friktionselement und Reibelement erreicht.

Es kann von Vorteil sein, dass das getriebene Reibelement ein linear getriebenes Reibelement ist, welches vorzugsweise eine plane Kontur aufweist.

Bei einer vorteilhaften Gestaltung der Anordnung ist zumindest ein Teil der Gleitflächen als Festkörpergelenk bzw. als Festkörpergelenke ausgebildet.

Die Anordnung soll nachfolgend anhand von Ausführungsbeispielen näher erläutert werden. Zur Verdeutlichung dienen die beigefügten Figuren 1 bis 9. Es werden für gleiche und gleich wirkende Teile dieselben Bezugszeichen verwendet.

Es zeigt:
- Fig. 1: eine Prinzipdarstellung eines Aktorkörpers mit einem ringförmigen Reibelement,
- Fig. 2: eine Schnittdarstellung der Anordnung aus Fig. 1 mit mehreren möglichen Kippachsen und einer optimierten Kippachse sowie angedeuteter Drehung α der optimierten Kippachse C bzw. C' um die Normale der Reibfläche,
- Fig. 3: eine erste Darstellung einer ersten Ausführungsform der Anordnung,
- Fig. 4: eine zweite Darstellung der ersten Ausführungsform der Anordnung,
- Fig. 5: eine Darstellung der Anordnung aus Fig. 3 und Fig. 4 von der Rückseite,
- Fig. 6: eine Darstellung der Anordnung aus den Fig. 3 bis 5 von der Rückseite mit einer Fassung
- Fig. 7: eine perspektivische Darstellung der in den vorhergehenden Figuren gezeigten Anordnung,
- Fig. 8: eine perspektivische Darstellung einer Anordnung mit einem Goniometerblech,
- Fig. 9: die in Fig. 7 gezeigte Anordnung in einer Seitenansicht,
- Fig. 10: eine weitere Ausführungsform einer Anordnung aus Aktorkörper und Reibelement in einer Ansicht von vorn,
- Fig. 11: die in Fig. 10 gezeigte Anordnung in einer Ansicht von hinten,
- Fig. 12: die in Fig.10 gezeigte Anordnung in einer Draufsicht,
- Fig. 13: die in Fig. 10 gezeigte Anordnung in einer perspektivischen Ansicht von vorn,
- Fig. 14: die in Fig. 10 gezeigte Anordnung in einer perspektivischen Ansicht von der Seite.

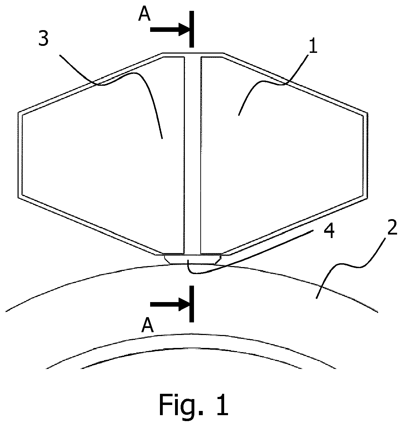

Fig. 1 zeigt in einer Prinzipdarstellung einen Aktorkörper 1 und ein dem Aktorkörper zugeordnetes, hier ringförmiges Reibelement 2. Der Aktorkörper besteht aus einem piezoelektrischen Material, insbesondere einer piezoelektrischen Keramik oder einem piezoelektrischen Kristall, in einer Einschicht- oder Mehrschichtbauweise. Der hier rautenförmig ausgebildete Aktorkörper weist Elektrodenflächen 3 auf, über die der Aktorkörper mit elektrischer Wechselspannung beaufschlagt wird. Der Aktorkörper schwingt im Ultraschallfrequenzbereich und steht über ein Friktionselement 4 mit dem Reibelement 2 im Kontakt. Das Reibelement wird hierdurch in rotatorische Bewegung versetzt.

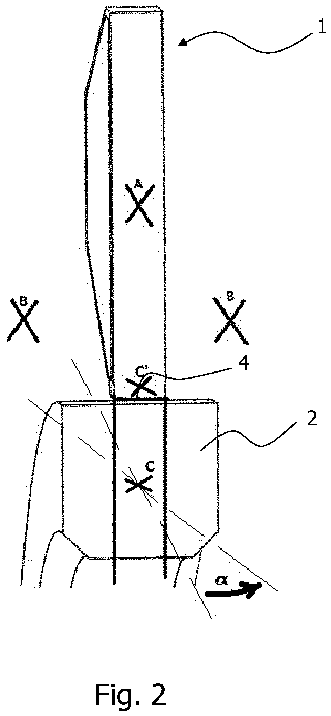

Fig. 2 zeigt eine Schnittdarstellung der Anordnung aus Fig. 1 entlang der Schnittlinie A-A. Die Anordnung aus dem Aktorkörper 1 und dem Reibelement 2 befindet sich idealerweise in einer Ebene. Allerdings kann die Lagerung des Aktorkörpers 1 wie bereits dargestellt nur mit einer begrenzten Steifigkeit ausgebildet werden. Der Aktorkörper 1 vollführt aus diesem Grund Kippbewegungen aus der gemeinsamen Ebene aus dem Aktorkörper 1 und dem Reibelement 2 heraus. Diese Kippbewegungen können um verschiedene Kippachsen erfolgen. Einige dieser Kippachsen sind in Fig. 2 eingezeichnet. Bei der Kippachse A, die im Wesentlichen dem Aktorschwerpunkt entspricht, kippt der Aktorkörper 1 um seine eigene Längsachse. Eine derartige Kippung ist äußerst nachteilig, denn in einem solchen Fall wirkt auf das Reibelement 2 eine Kraft, die dieses aus der gemeinsamen Ebene aus Aktorkörper 1 und Reibelement 2 hinaustreibt, wodurch die Kippbewegung des Aktorkörpers 1 zusätzlich verstärkt wird. Die durch die Kippbewegung um die Achse A ausgelösten Störungen des Laufs des Reibelementes verstärken sich hierdurch und die Anordnung aus Aktorkörper 1 und Reibelement 2 wird letztlich instabil.

Eine Kippbewegung um eine der Achsen B oder um beide dieser Achsen entspricht einer Kippbewegung, bei der der Aktorkörper 1 entweder zu einer Seite aus der gemeinsamen Ebene aus Aktorkörper 1 und Reibelement 2 herausschwenkt und dabei zumindest teilweise von dem Reibelement 2 abgehoben ist oder aber bei der der Aktorkörper 1 abwechselnd zu beiden Seiten aus der gemeinsamen Ebene aus Aktorkörper 1 und Reibelement 2 in oszillierender Weise herausschwenkt. Im ersten Fall kann sich ein stabiles Gleichgewicht mit konstanter Querkraft einstellen, während sich im zweiten Fall kein stabiles Gleichgewicht einstellt, woraus eine unkontrollierbare Schwingung des Aktorkörpers 1 resultiert, welche zu einer deutlichen Verringerung der Antriebskraft und zu einem hohen Betriebsgeräusch führt, das als ein Quietschen wahrnehmbar ist.

Wenn die Kippachse aus der Position der Kippachse A in Richtung C', d. h. in Richtung Friktionselement 4 hin verschoben wird, ergibt sich ein entsprechend verkürzter Hebel der unerwünschten Querkräfte um die Kippachse sowie ein erhöhtes Trägheitsmoment des Aktors. Die Folge ist, dass sich die Amplitude, aber auch Geschwindigkeit bzw. Frequenz der unerwünschten Aktorquerbewegungen deutlich verringert, was zu einem ruhigeren und harmonischeren Lauf eines entsprechenden Motors führt.

Eine Kippung um die Kippachse C ist besonders vorteilhaft, da hieraus eine selbststabilisierende Ausrichtung der erfindungsgemäßen Anordnung resultiert. Gemäß Fig. 2 verläuft die Kippachse C senkrecht zum Querschnitt des Abschnittes des Reibelementes 2, der momentan mit dem Aktorkörper im mechanischen bzw. Friktionskontakt steht. Bei einer Kippung des Aktorkörpers 1 um die Achse C ist das Reibelement äußerst lagestabil. Dabei wirkt der Aktorkörper 1 aus den jeweils verschiedenen Kippstellungen stets in Richtung der lagestabilen Kippachse C ein und steht darüber hinaus auch im gleichbleibenden Kontakt mit dem Reibelement 2.

Die optimierte Position der Kippachse C bzw. C' führt zu einem veränderten und in der Regel verkürzten Hebel der Querkraft um die gewählte Kippachse. Verbleibende Kräfte in Richtung der Oberfläche des Friktionselementes 4 ergeben eine Stabilisierung der Anordnung und eines in diesem Sinne realisierten Ultraschallmotors mit dem Ergebnis eines verschleißärmeren Betriebes und einem deutlich verbesserten Regelverhalten.
Eine weitere Verbesserung der erfindungsgemäßen Anordnung und damit eines entsprechenden Antriebs gelingt dadurch, dass die optimierte Kippachse C bzw. C' um wenige Grad um die Normale der Reibfläche, d.h. der Kontaktfläche zwischen Aktorkörper und Reibelement, gedreht ist, wie dies mit der Pfeildarstellung und dem Winkel α in der Fig. 2 prinzipiell gezeigt ist.

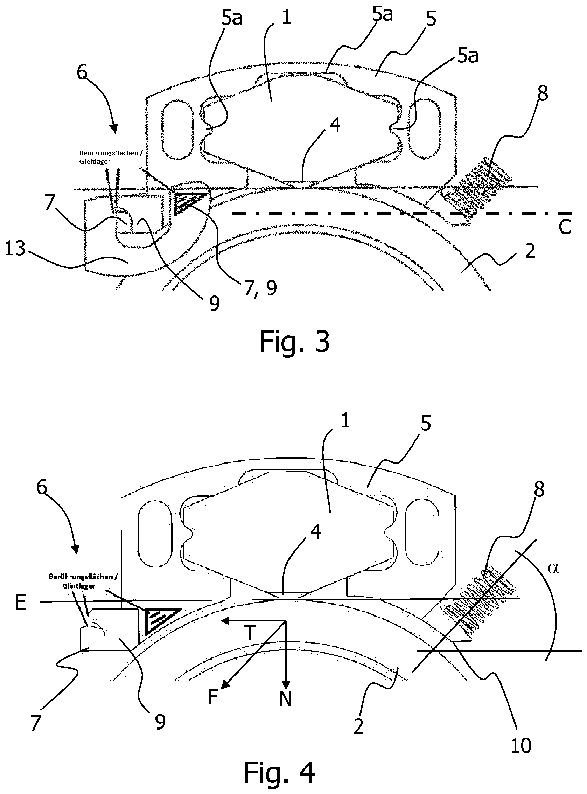

Fig. 3 zeigt eine erste Ausführungsform einer Anordnung mit optimierter und selbststabilisierender Kippachse C. Die hier gezeigte Anordnung ist eine Realisierung des in Fig. 1 gezeigten Grundprinzips aus rautenförmigem Aktorkörper und ringförmigem Reibelement. Der Aktorkörper 1 ist hier von einer Aktorhalterung 5 umgeben, die den Aktorkörper umgreift und ihn an einer Reihe von Arretierungspunkten 5a formschlüssig in seiner Position innerhalb der Aktorhalterung fixiert. Die Aktorhalterung bildet ein mechanisches Mittel, mit dem der Aktorkörper erfasst und innerhalb der Anordnung fixiert und justiert ist.

Die Fixierung und die Justage der Aktorhalterung und damit des Aktorkörpers erfolgt im hier vorliegenden Fall über ein Gleitlager 6 mit einer Reihe von Gleitflächen 7 einerseits und eine Druckfeder 8 andererseits. Die Gleitflächen des Gleitlagers sind so ausgebildet, dass diese eine Kippung der durch sie geführten Aktorhalterung um die ebenfalls hier eingezeichnete optimierte Kippachse C ermöglichen. Das Gleitlager als solches ist ohne zusätzliche Befestigungsmittel ausgebildet. Die Aktorhalterung 5 sitzt über entsprechende Gegenflächen 9 auf den Gleitflächen des Gleitlagers formschlüssig auf. Dieser formschlüssige Sitz wird durch die von der Druckfeder 8 erzeugte Anpresskraft stabilisiert. Die Druckfeder 8 ist hierzu auf einen hier zunächst nicht gezeigten Aktorrahmen rückgelagert.

Fig. 4 zeigt die Kräfteverteilung der durch die Druckfeder 8 ausgeübten Druckkraft. Die von der Feder erzeugte Druckkraft F wirkt auf einen Kraftaufnehmer 10 an der Aktorhalterung 5. Dieser Kraftaufnehmer weist bezüglich der durch die Auflagefläche des Friktionselementes 4 auf dem Reibelement 2 definierten Friktionsebene E einen Übersetzungswinkel α auf. Infolge dieses Übersetzungswinkels wird die von der Druckfeder 8 ausgeübte Druckkraft F in eine Tangentialkomponente T und eine Normalkomponente N geteilt. Die Tangentialkomponente T presst die Aktorhalterung 5 gegen die Gleitflächen 7 des Gleitlagers 6 und erzeugt dort den Formschluss zwischen den Gegenflächen 9 der Aktorhalterung und den Gleitflächen 7 des Gleitlagers 6. Die Normalkomponente N drückt die Aktorhalterung 5 und somit das Friktionselement 4 des Aktorkörpers 1 in Richtung des Reibelementes 2, sodass zwischen dem Friktionselement und dem Reibelement der notwendige Reibschluss erzeugt wird. Die Lage des Gleitlagers in Verlängerung der optimierten Kippachse C sichert die optimale Lage der Kippachse für die hier vorliegende Anordnung. Diese liegt in jedem Falle unterhalb der Friktionsebene E und somit im optimalen erfindungsgemäßen Bereich.

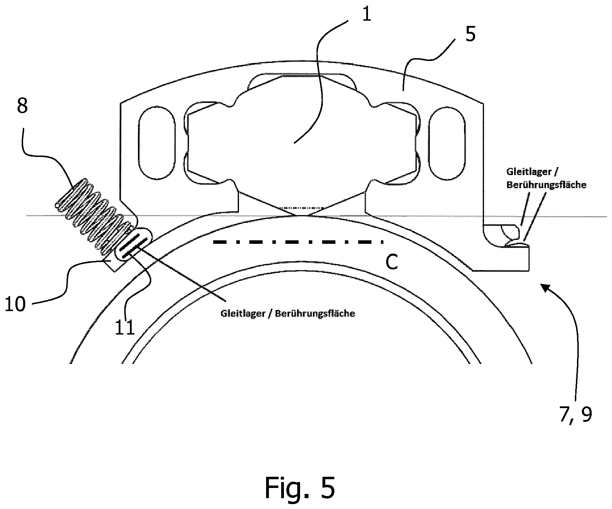

Fig. 5 zeigt die in den Figuren 3 und 4 gezeigte Anordnung von der Rückseite. Der Kraftaufnehmer 10 an der Aktorhalterung 5 weist eine Berührungsfläche 11 für eine rückwärtige Gleitlagerung an einer hier nicht dargestellten Rückwand auf. Dadurch erhält der Kraftaufnehmer eine stabile Führung, wobei die Richtung der von der Druckfeder 8 erzeugten Kraft in einer eindeutig definierten Weise auf den Kraftaufnehmer einwirkt und von dort in der beschriebenen Weise durch die Aktorhalterung umgeformt wird.

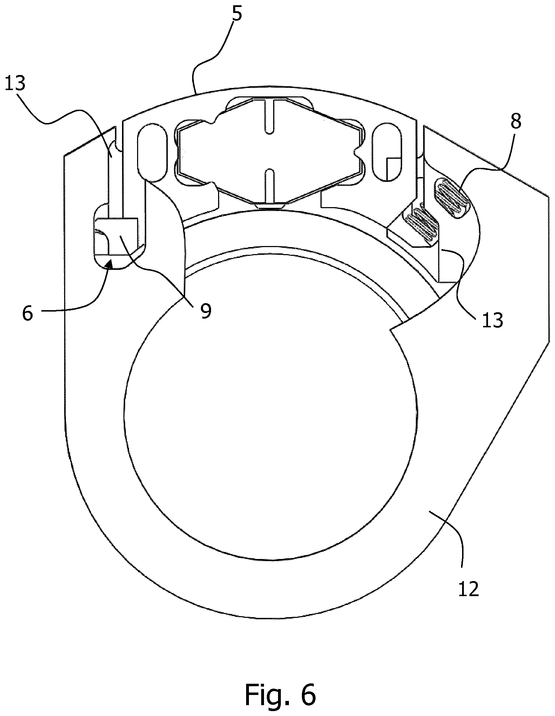

Fig. 6 zeigt die bereits beschriebenen Komponenten der Anordnung in Verbindung mit einer Fassung 12. Die Fassung ist hier transparent dargestellt. Bei der praktischen Realisierung der erfindungsgemäßen Anordnung handelt es sich um eine hinreichend stabile Platte aus Kunststoff, Metall oder einem Material mit vergleichbarer Steifigkeit, die an den entsprechenden Stellen mit Aussparungen 13 versehen ist. Eine der Aussparungen dient als Gegenlager für die Druckfeder 8, eine zweite Aussparung dient abschnittsweise als zusätzliches Führungsmittel für die an der Aktorhalterung 5 angeordneten Gegenfläche 9 und wirkt somit mit dem Gleitlager 6 zusammen. Die Fassung 12 ist in einer hier nicht gezeigten Weise ortsfest fixiert und verbindet somit die Anordnung mit hier nicht gezeigten externen Vorrichtungen.

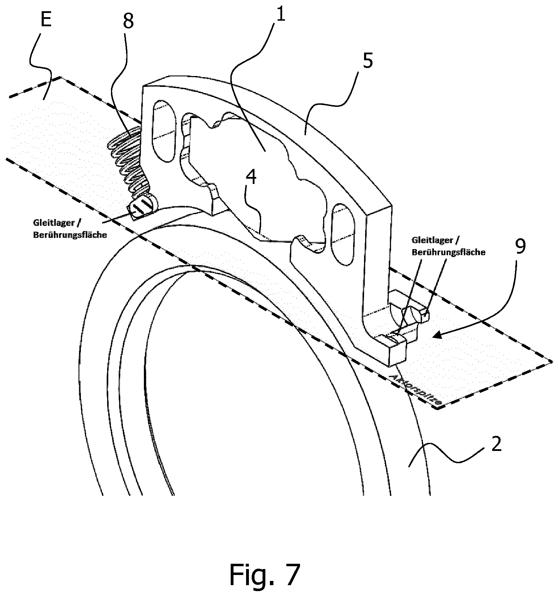

Fig. 7 zeigt die vorhergehend beschriebene Anordnung in einer perspektivischen Gesamtdarstellung. Das Gleitlager 6 mit den Gleitflächen 7 ist hier weg gelassen. Zu erkennen ist hier die Gegenfläche 9 an der Aktorhalterung 5 sowie der Aktorkörper 1. Die Friktionsebene E ist ebenfalls dargestellt. Sie ist die durch den Berührungspunkt des Friktionselementes 4 mit dem Reibelement 2 verlaufende Tangentialebene des Reibelementes. Die optimale Kippachse C ist hier nicht eingezeichnet. Sie verläuft unterhalb der Friktionsebene E.

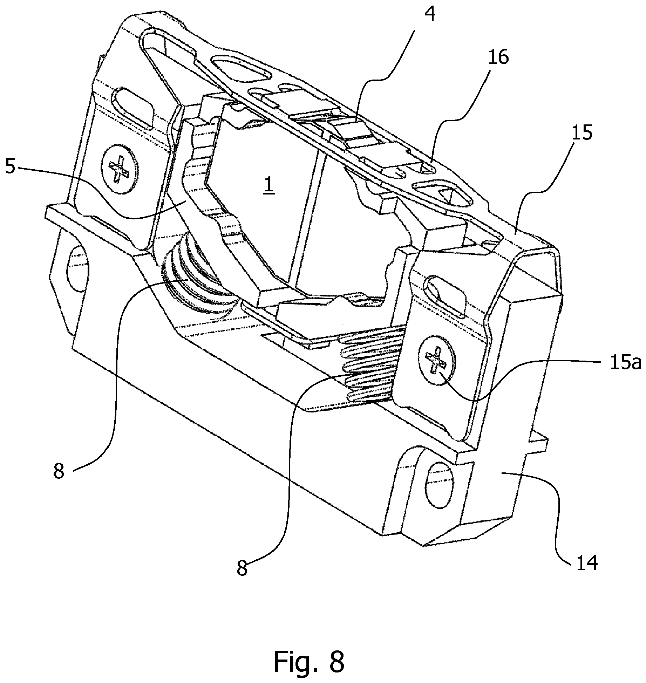

Fig. 8 zeigt eine weitere erfindungsgemäße Anordnung, die für lineare Antriebe geeignet ist, wobei die entsprechende Aktorlagerung eine Goniometerlagerung darstellt. Die Anordnung umfasst einen hier ebenfalls rautenförmig geformten Aktorkörper 1 mit Friktionselement 4. Der Aktorkörper ist ebenfalls mit einer Aktorhalterung 5 umgeben. Diese Aktorhalterung ruht in einem Aktorrahmen 14. Bei diesem Aktorrahmen handelt es sich zweckmäßigerweise um ein massives Bauteil aus Metall oder Kunststoff. Der Aktorrahmen 14 dient zum einen als Gegenlager für zwei Druckfedern 8, die die Aktorhalterung 5 gegen den Aktorrahmen abstützen. Zum anderen ist an dem Aktorrahmen 14 ein so genanntes Goniometerblech 15 mittels einer Schraubverbindung 15a befestigt. Das Goniometerblech weist mindestens einen Durchbruch 16 auf, der einen dafür vorgesehenen Abschnitt der Aktorhalterung 5 aufnimmt und dabei umschließt. Die Aktorhalterung wird somit durch die Druckfedern 8 mit dem Aktorrahmen 14 als Gegenlager in den Durchbruch 16 des Goniometerblechs 15 gedrückt und ist auf diese Weise zwischen dem Aktorrahmen und dem Goniometerblech gelagert.

Die Achsen der Druckfedern 8 sind bei dem Beispiel aus Fig. 8 gegeneinander geneigt. Zusammen mit dem Durchbruch 16 im Goniometerblech 15 wird somit eine verschiebungssichere Lagerung der Aktorhalterung bewirkt. Die Längsachsen der Druckfedern 8 schneiden sich dabei im Bereich des Friktionselementes 4. Die von den Druckfedern erzeugte Druckkraft wirkt somit konzentriert auf das Friktionselement, insbesondere dessen Kontaktoberfläche zum Reibelement ein und bewirkt somit einen optimalen Reibschluss mit dem Reibelement.

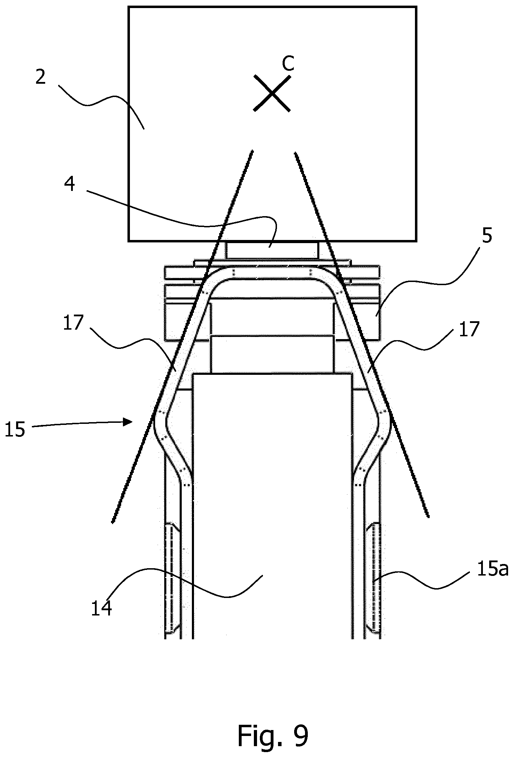

Fig. 9 zeigt den Aufbau des Goniometerblechs 15 in einer vergrößerten Seitenansicht der Vorrichtung aus Fig. 8. Das Goniometerblech weist konisch zulaufende Flanken 17 auf, deren Richtungen sich in einem gedachten Punkt C schneiden. Dieser Punkt befindet sich innerhalb des Querschnitts des getriebenen Reibelementes 2. Die durch diesen Punkt senkrecht zur Blattebene verlaufende Achse ist identisch mit der optimierten Kippachse C der Anordnung. Das Goniometerblech legt somit den Freiheitsgrad der seitlichen Kippbewegung so fest, dass dessen Kippachse der optimierten Kippachse C entspricht.

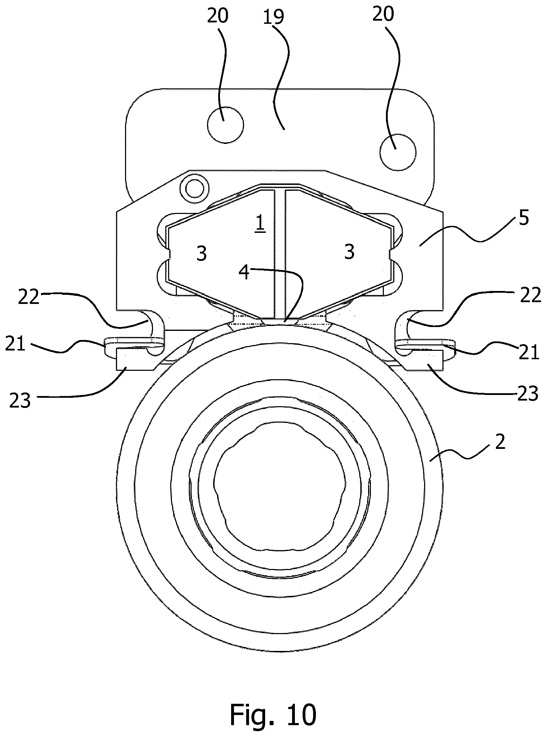

Fig. 10 zeigt eine weitere Ausführungsform einer Anordnung aus Aktorkörper und Reibelement in einer Ansicht von vorn. Diese Ausführungsform greift auf einen Aktorkörper 1 gemäß der vorhergehenden Ausführungsbeispiele zurück. Dieser weist die bereits erläuterten Elektrodenflächen 3 auf und ist in die Aktorhalterung 5 eingefasst. Die Aktorhalterung 5 ist mit einem Federrahmen 19 verbunden, der bei dieser Ausführungsform die federnde Lagerung der Aktorhalterung übernimmt. Der Federrahmen 19 enthält eine Reihe von Bohrungen 20 zur Befestigung der gesamten Anordnung in einer übergreifenden Vorrichtung.

Der Federrahmen 19 und die Aktorhalterung 5 greifen ineinander. Hierzu sind zum einen von dem Federrahmen 19 nach vorn geführte Spannabschnitte 21 vorgesehen. Diese greifen in dafür vorgesehene Aussparungen 22 der Aktorhalterung ein und drücken den Aktorrahmen in Richtung des Federrahmens. Weiterhin werden die nach vorn geführten Spannabschnitte 21 des Halterahmens von darunter gelegenen Ausformungen 23 der Aktorhalterung umgriffen. Die Teile 21, 22 und 23 bilden in ihrer Gesamtheit eine Arretierung für die Aktorhalterung in dem Federrahmen aus.

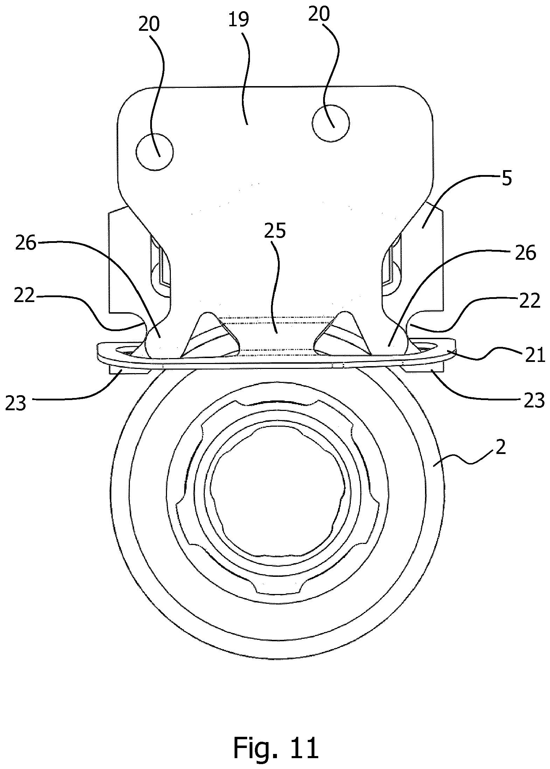

In Fig. 11 ist diese Anordnung in einer Ansicht von hinten dargestellt. Die Figur zeigt den Federrahmen 19 sowie die hier teilweise verdeckte Aktorhalterung 5. Die Spannabschnitte 21 sind über einen gebogenen Steg 25 mit dem Federrahmen 19 verbunden. Der Federrahmen 19 sichert die Aktorhalterung 5 zusätzlich über flügelartig ausgebildete Haltezungen 26 nach hinten ab.

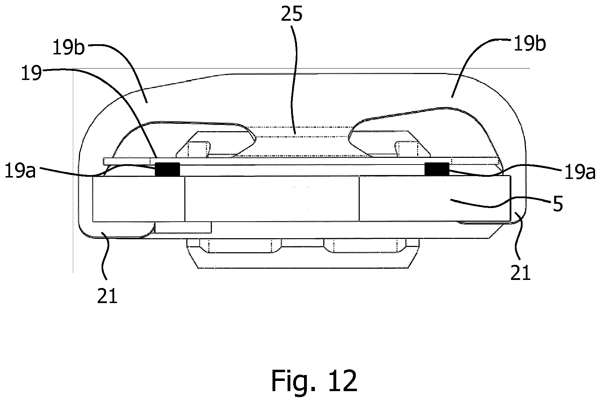

Fig. 12 zeigt die Anordnung aus Fig. 10 und Fig. 11 in einer Ansicht von oben. Der Federrahmen 19 ist in dieser Ansicht ein dünnes Blech. Davor befindet sich die Aktorhalterung 5. Zwischen dem Federrahmen 19 und der Aktorhalterung 5 ist ein Gleitlager 19a vorgesehen, an dem die Aktorhalterung an dem Federrahmen abgestützt ist. An dem gebogenen Steg 25 geht der Federrahmen 19 über einen Bogen 19b in den Spannabschnitt 21 über, der sich nach links und nach rechts um die Aktorhalterung 5 herum erstreckt, dort in die Aussparungen 22 eingreift und die Aktorhalterung in Richtung des Federrahmens drückt.

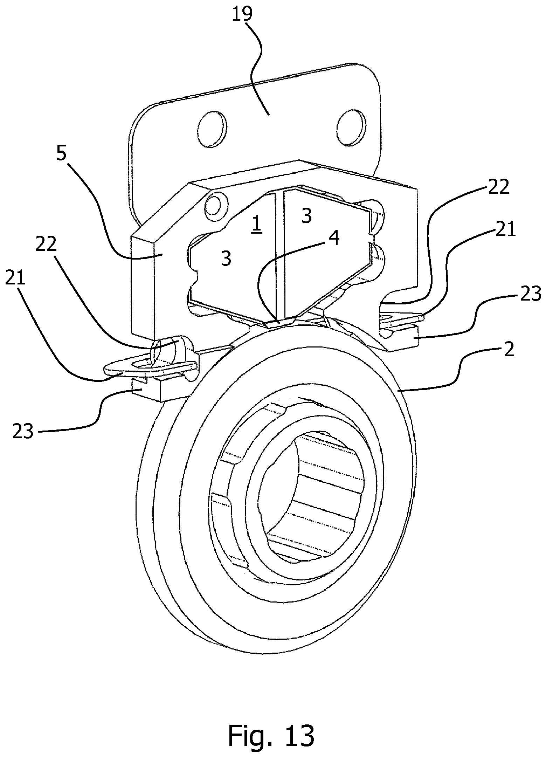

Fig. 13 zeigt die Anordnung aus Fig. 10 in einer perspektivischen Darstellung von vorn. Dargestellt ist hier der Federrahmen 19, die davor befindliche Aktorhalterung 5 mit dem Aktorkörper 1 sowie die Aussparungen 22 an der Aktorhalterung zusammen mit den Ausformungen 23 und die dort eingreifenden Spannabschnitte 21.

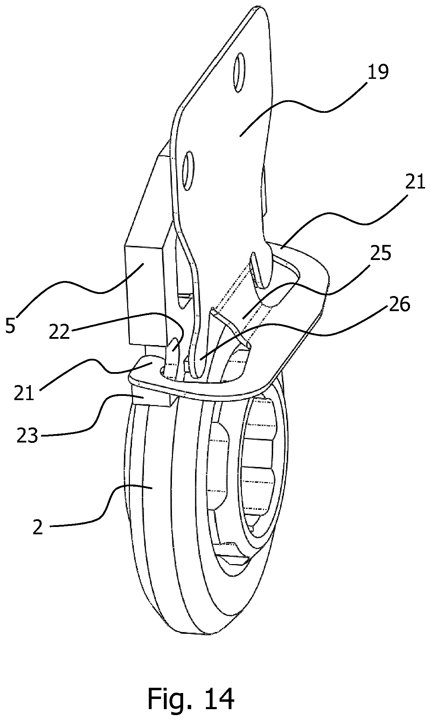

In Fig. 14 ist die Anordnung aus Fig. 10 in einer perspektivischen Ansicht von hinten dargestellt. Gezeigt ist hier wiederum der Federrahmen 19, der über den gebogenen Steg 25 in die Spannabschnitte 21 übergeht. Gut zu erkennen ist hier das Eingreifen der Spannabschnitte 21 in die Aussparungen 22 der Aktorhalterung 5.

Der Federrahmen 19 erfüllt bei der in den Figuren 10 bis 13 gezeigten Ausführungsform somit die Funktion des Goniometerblechs 15 aus den Figuren 8 und 9. Die verschiebungssichere Lagerung übernehmen im hier vorliegenden Fall die Spannabschnitte 21 zusammen mit den Aussparungen 22 an der Aktorhalterung, wobei auch hier die Kippachsen in der bei den vorherigen Ausführungsbeispielen üblichen Weise angeordnet sind.

Die erfindungsgemäße Vorrichtung wurde anhand von Ausführungsbeispielen erläutert. Weitere Ausgestaltungen ergeben sich aus den Unteransprüchen.

### Bezugszeichenliste

- 1: Aktorkörper
- 2: Reibelement
- 3: Elektrodenfläche
- 4: Friktionselement
- 5: Aktorhalterung
- 5a: Arretierungspunkt
- 6: Gleitlager
- 7: Druckfeder
- 9: Gegenfläche
- 10: Kraftaufnehmen
- 11: Berührungsfläche
- 12: Fassung
- 13: Aussparung
- 14: Aktorrahmen
- 15: Goniometerblech
- 15a: Schraubverbindung
- 16: Durchbruch
- 17: konische Flanken
- 19: Federrahmen
- 19a: Gleitlager
- 19b: Bogen
- 20: Bohrung
- 21: Spannabschnitt
- 22: Aussparung
- 23: Ausformung
- 25: Steg
- 26: Haltezunge

- α: Anstellwinkel Druckfeder
- A: erste mögliche Kippachse
- B: zweite mögliche Kippachse
- C: optimierte Kippachse
- E: Friktionsebene
- F: Druckkraft
- N: Normalkomponente
- T: Tangentialkomponente

## Patentansprüche

1. Anordnung für einen Ultraschallmotor , umfassend einen Aktorkörper (1), eine den Aktorkörper (1) aufnehmende Aktorhalterung (5), ein Aktorlager, und ein vom Aktorkörper getriebenes Reibelement (2), wobei zwischen dem Aktorkörper und dem Reibelement ein flächiger Reibkontakt besteht und die Anordnung eine optimierte Kippachse (C; C') aufweist, um die die Aktorhalterung oder das Reibelement verschwenkbar ist und die vom Schwerpunkt des Aktorkörpers beabstandet und in Richtung des vom Aktorkörper (1) berührten Abschnittes des Reibelementes (2) verlagert ist, wobei das Aktorlager so gestaltet ist, dass auftretende Kippungen des Aktorkörpers (1) um die nicht durch den Schwerpunkt des Aktorkörpers (1) verlaufende Kippachse erfolgen,
**dadurch gekennzeichnet, dass**
das Aktorlager als eine Goniometer-Lagerung ausgebildet ist, die eine Verkippung des Aktorlagers um eine mit dem Verlauf der optimierten Kippachse (C, C') identische Achse ermöglicht.

2. Anordnung nach Anspruch 1,
**dadurch gekennzeichnet, dass**
die optimierte Kippachse (C) durch die Querschnittsfläche des von dem Aktorkörper (1) berührten Abschnittes
des getriebenen Reibelementes (2) verläuft, so dass sich eine selbstabilisierende Ausrichtung der Anordnung ergibt.

3. Anordnung nach Anspruch 1 oder 2,
**dadurch gekennzeichnet, dass**
das getriebene Reibelement (2) ein rotatorisch getriebenes Element mit einer kreisringförmigen Außenkontur ist.

4. Anordnung nach einem der vorhergehenden Ansprüche,
**dadurch gekennzeichnet, dass**
die Goniometer-Lagerung ein die Aktorhalterung (5) mittels eines Durchbruchs (16) umfassendes und auf einen raumfesten Aktorrahmen (14) montiertes Goniometerblech (15) aufweist.

5. Anordnung nach Anspruch 4,
**dadurch gekennzeichnet, dass**
die Aktorhalterung (5) mittels einer auf den raumfesten Aktorrahmen (14) rückgelagerten Federanordnung in dem Durchbruch des Goniometerblechs (16) gehalten wird.

6. Anordnung nach einem der Ansprüche 4 oder 5,
**dadurch gekennzeichnet, dass**
die Federanordnung durch mindestens zwei Druckfedern (8) gebildet ist, wobei sich die Richtungen der durch die Druckfedern ausgeübten Druckkräfte im Bereich eines am Aktorkörper (1) befindlichen Friktionselementes (4) schneiden.

7. Anordnung nach Anspruch 1 oder 2 oder einem der Ansprüche4 bis 6,
**dadurch gekennzeichnet, dass**
das vom Aktorkörper getriebene Reibelement ein linear getriebenes Reibelement ist.

8. Anordnung nach einem der vorhergehenden Ansprüche,
**dadurch gekennzeichnet, dass**
zumindest ein Teil der Gleitflächen (7) als Festkörpergelenk ausgebildet ist.

## Claims

1. An assembly for an ultrasonic motor, comprising an actuator body (1), an actuator retainer (5) which accommodates the actuator body (1), an actuator bearing, and a friction element (2) driven by the actuator body, wherein there is planar frictional contact between the actuator body and the friction element, and the assembly has an optimised tilt axis (C; C'), about which the actuator retainer or the friction element can be pivoted and which is arranged at a distance from the centre of gravity of the actuator body and is shifted in the direction of the section of the friction element (2) which is touched by the actuator body (1), wherein the actuator bearing is formed in such a way that occurring tilts of the actuator body (1) occur about the tilt axis which does not extend through the centre of gravity of the actuator body (1), **characterized in that** the actuator bearing is formed as a goniometer bearing, which allows tilting of the actuator bearing about an axis which is identical to the progression of the optimised tilt axis (C, C').

2. An assembly according to claim 1, **characterized in that** the optimised tilt axis (C) extends through the cross-sectional surface of the section of the driven friction element (2) which is touched by the actuator body (1), so that a self-stabilising orientation of the assembly is obtained.

3. An assembly according to claim 1 or 2, **characterized in that** the driven friction element (2) is a rotatably driven element with an annular outer contour.

4. An assembly according to one of the preceding claims, **characterized in that** the goniometer bearing comprises a goniometer plate (15) which encloses the actuator retainer (5) by means of a breakthrough (16) and is mounted on a spatially-fixed actuator frame (14).

5. An assembly according to claim 4, **characterized in that** the actuator retainer (5) is retained in the breakthrough of the goniometer plate (16) by means of a spring arrangement back-mounted on the spatially-fixed actuator frame (14).

6. An assembly according to one of the claims 4 or 5, **characterized in that** the spring arrangement is formed by at least two pressure springs (8), wherein the directions of the pressure forces exerted by the pressure springs intersect in the region of a friction element (4) disposed on the actuator body (1).

7. An assembly according to claim 1 or 2 or one of the claims 4 to 6, **characterized in that** the friction element driven by the actuator body is a linearly driven friction element.

8. An assembly according to one of the preceding claims, **characterized in that** at least a part of the sliding surfaces (7) are formed as a solid joint.

## Revendications

1. Agencement pour un moteur à ultrasons, comportant un corps d'actionneur (1), une monture d'actionneur (5) recevant le corps d'actionneur (1), un coussinet d'actionneur et un élément de friction (2) entraîné par le corps d'actionneur, un contact de friction surfacique existant entre le corps d'actionneur et l'élément de friction et l'agencement présentant un axe de basculement optimisé (C ; C') autour duquel la monture d'actionneur ou l'élément de friction est capable de pivoter et qui est écarté du centre de gravité du corps d'actionneur et déplacé en direction de la portion de l'élément de friction (2) touchée par le corps d'actionneur, et le coussinet d'actionneur est conçu de telle sorte que des pivotements apparaissant du corps d'actionneur (1) s'effectuent autour de l'axe de basculement qui ne passe pas par le centre de gravité du corps d'actionneur (1),
**caractérisé en ce que**
le coussinet d'actionneur est réalisé sous forme de coussinet de goniomètre qui permet un basculement du coussinet d'actionneur autour d'un axe identique au tracé de l'axe de basculement optimisé (C, C').

2. Agencement selon la revendication 1,
**caractérisé en ce que**
l'axe de basculement optimisé (C) passe à travers la surface de section transversale de la portion de l'élément de friction entraîné (2) touchée par le corps d'actionneur (1), de telle sorte qu'il en résulte une orientation auto-stabilisante de l'agencement.

3. Agencement selon la revendication 1 ou 2,
**caractérisé en ce que** l'élément de friction entraîné (2) est un élément entraîné en rotation présentant un contour extérieur annulaire.

4. Agencement selon l'une des revendications précédentes,
**caractérisé en ce que**
le coussinet de goniomètre comprend une tôle de goniomètre (15) entourant la monture d'actionneur (5) au moyen d'une traversée (16) et montée sur un cadre d'actionneur (14) stationnaire dans l'espace.

5. Agencement selon la revendication 4,
**caractérisé en ce que**
la monture d'actionneur (5) est retenue dans la traversée de la tôle de goniomètre (16) au moyen d'un agencement élastique monté à son tour sur le cadre d'actionneur (14) stationnaire dans l'espace.

6. Agencement selon l'une des revendications 4 ou 5,
**caractérisé en ce que**
l'agencement élastique est formé par au moins deux ressorts de compression (8), les sens des forces de compression exercées par les ressorts de compression se recoupent dans la zone d'un élément de friction (4) situé sur le corps d'actionneur (1).

7. Agencement selon la revendication 1 ou 2 ou selon l'une des revendications 4 à 6,
**caractérisé en ce que**
l'élément de friction entraîné par le corps d'actionneur est un élément de friction entraîné linéairement.

8. Agencement selon l'une des revendications précédentes,
**caractérisé en ce que**
une partie au moins des surfaces de glissement (7) sont réalisées sous forme d'articulation à corps solides.
